# EUROPEAN PATENT APPLICATION

(11) **EP 2 853 961 A1**
(43) Date of publication of application: **01.04.2015**
(21) Application number: 14174841.8
(22) Date of filing: 27.06.2014
(51) Int. Cl.: G05B 19/042

(54) **Device setting apparatus, recording medium recording device setting program, information transfer system, and information transfer method**

(30) Priority: 09.07.2013 JP 2013143542; 24.03.2014 JP 2014060849
(71) Applicant: Yokogawa Electric Corporation, Tokyo 180-8750 (JP)
(72) Inventor: Furihata, Ryouhei, Tokyo (JP); Kanokogi, Hiroaki, Tokyo (JP)
(74) Representative: Henkel, Breuer & Partner

(57) **Abstract**

A device setting apparatus is configured to communicate with a field device, and to acquire information from the field and to set information with respect to the field device. The device setting apparatus includes a generator configured to generate an information code using at least one of acquired information acquired from the field device, work history information indicating a work history for the field device, reference destination information stored in reference destination information table and indicating a reference destination for support information supporting a work of field device, and license information (a two-dimensional code generator, a sound code generator).

## Description

### BACKGROUND OF THE INVENTION

### Field of the Invention

The present invention relates to a device setting apparatus, a recording medium recording a device setting program, an information transfer system, and an information transfer method.

Priority is claimed on Japanese Patent Application No. 2013-143542, filed July 9, 2013, and Japanese Patent Application No. 2014-060849, filed March 24, 2014, the contents of which are incorporated herein by reference.

### Description of Related Art

Conventionally, in a plant or a factory or the like (hereinafter, collectively referred to as a plant), a distributed control system (DCS), to which on-site devices (measuring instruments and actuators) called field devices and control apparatuses connected to provide control thereof via a communication means, is configured to implement an automated operation. In a plant in which such a distributed control system is configured, from the standpoint of preventing abnormal operation or maintaining measurement accuracy or the like, workers perform periodic or non-periodic maintenance of the field devices.

Field devices are often maintained by a device setting apparatus such as laptop or tablet computers or a PDA (personal digital assistant), into which a dedicated tool (field device setting tool) that can communicate with field devices by cable or wirelessly to set and adjust the field devices, has been installed. Specifically, in performing maintenance of a field device, tasks are performed by a worker operating a device setting apparatus to read out and verify the contents of device information (parameters) set in the field device being maintained and a worker operating the device setting apparatus to make settings of new device information into a field device.

During the maintenance of a field device, there are cases in which a worker uses a mobile telephone (or transceiver) to communicate with a superior or a manager or the like orally or needs to use a computer to acquire required information from outside. The case in which the worker communicates with a superior or a manager or the like orally can be when the worker makes a report of the result of work or asks for instructions regarding work to be done, and the case in which the worker uses a computer to acquire required information from outside can be when acquiring help information regarding a the field device or device setting apparatus.

Specifically, when a report is made of the results of work, the worker uses a mobile telephone and reports information displayed on the device setting apparatus (for example, device information acquired from a field device) orally to a superior or manager. When asking for instructions regarding work to be done, the worker, similar to the case of reporting the result of work, uses a mobile telephone and orally communicates the required information to a superior or a manager and asks for oral instructions from the superior or manager. When acquiring help information, the worker operates a computer or the like to acquire required information by accessing a website of a manufacturer or vendor of the field device or a device setting apparatus.

Japanese Unexamined Patent Application, First Publication No. 2012-32855 discloses art that uses a two-dimensional bar code (two-dimensional code) to acquire information from a field device or to transfer information to a field device. Specifically, in Japanese Unexamined Patent Application, First Publication No. 2012-32855, information from a field device is acquired by reading the content of a two-dimensional bar code displayed on a data display provided in a field device using a reading apparatus, and the content of the two-dimensional bar code displayed on the data display of the reading apparatus is transferred to a field device by having the field device read it.

During the maintenance work on a field device, when oral contact is being made by a worker using a mobile telephone, the influence of surrounding noise and the like can make it difficult to relate the intention of the worker (and also of a superior or manager or the like), there are cases in which it takes a time to communicate an intent. Additionally, there are cases in which oral communication lead to transfer of incorrect information because of incorrectly reading, speaking, and hearing information displayed on the device setting apparatus.

In contrast, in the case of a worker acquiring required information from outside using a computer during maintaining the field device, it can be thought that the situations involved with oral communication as described above do not occur. However, in order to maintain security in a network laid throughout a plant, there is generally isolation from external networks such as the Internet. For this reason, it is not possible to access the websites of the manufacturers or vendors of field devices and device setting apparatuses, thus, there are cases in which it is not possible to acquire required information. Even in cases in which access to the website of a manufacturer or vendor of a field device or device setting apparatus is possible, because the location of the required information is unclear, there are cases in which acquisition of the required information requires a long time.

Device setting apparatuses used in field device maintenance include those capable of near-field communication such as Bluetooth (registered trademark) and those enabling the attachment and removal of a recording medium such as a USB (Universal Serial Bus) memory. When using such a device setting apparatus, if near-field communication or a recording medium is used to exchange information, it can be thought that the situations involved with oral communication as described above do not occur. However, for example, from the standpoint of preventing infection by viruses and maintaining security, a device setting apparatus is often forbidden from using near-field communication or a recording medium, thereby actually requiring oral communication.

### SUMMARY OF THE INVENTION

One aspect of the present invention provides a device setting apparatus, a recording medium recording a device setting program, an information transfer system and an information transfer method capable of accurate and reliable information transfer, while maintaining security.

A device setting apparatus according to an aspect of the present invention may include a generator configured to generate an information code using at least one of a first information acquired from a field device by communicating with the field device, a second information indicating a work history for the field device, a third information indicating a reference destination for support information supporting a work of field device, and a fourth information required to enable a program to acquire information from the field device and to set information with respect to the field device.

According to the aspect of the present invention, the information code may be generated using at least one of the first information acquired from the field device by communicating with the field device, the second information indicating the work history for the field device, the third information indicating a reference destination for support information supporting a work of field device, and the fourth information required to enable a program to acquire information from the field device and to set information with respect to the field device.

The device setting apparatus according to the aspect of the present may further include at least one of a display configured to display the information code and a sound output unit configured to output the information code as a sound.

In the device setting apparatus according to the aspect of the present, the display may include a first display region configured to display at least one of the first, second, third, and fourth information, and a second display region configured to display the information code generated by the generator.

The device setting apparatus according to the aspect of the present may further include an input unit configured to receive an instruction and an editor configured to edit the information displayed in the first display region in accordance with the instruction input from the input unit. If the editor edits the information displayed in the first display region, the generator may generate the information code using the edited information.

In the device setting apparatus according to the aspect of the present, the information code displayed in the second display region may be enlargeable or reducible in accordance with the instruction input from the input unit.

In the device setting apparatus according to the aspect of the present, the editor may be configured to add the information displayed in the first display region with information requesting at least one of provision of information of the field device, a purchase of the field device, and repair of the field device in accordance with the instruction input from the input unit.

In the device setting apparatus according to the aspect of the present, the information code may be one of a one-dimensional code, a two- dimensional code, and a color code.

In the device setting apparatus according to the aspect of the present, the first information may include at least one of device information identifying the field device, setting information set into the field device, and measurement information measured by the field device.

In the device setting apparatus according to the aspect of the present, the fourth information may include license information of the program.

A non-transitory computer-readable storage medium storing a device setting program according to an aspect of the present invention, when executed by a computer, may cause the computer to generate an information code using at least one of a first information acquired from a field device by communicating with the field device, a second information indicating a work history for the field device, a third information indicating a reference destination for support information supporting a work of field device, and a fourth information required to enable a program to acquire information from the field device and to set information with respect to the field device.

An information transfer system according to an aspect of the present invention may include the device setting apparatus described above and a portable terminal device including an input device configured to receive the information code output from the device setting apparatus. The portable terminal device may be configured to transmit to instructed destination at least one of the first and second information included in the information code input into the input unit.

In the information transfer system according to the aspect of the present, if the information code input into the input device includes the third information, the portable terminal device may be accessible to the reference destination indicated by the third information via network.

A method for transferring information according to an aspect of the present invention may include generating an information code using at least one of a first information acquired from a field device, a second information indicating a work history for the field device, a third information indicating a reference destination for support information supporting a work of field device, and a fourth information required to enable a program to acquire and set maintenance information of the field device with respect to the field device.

The method for transferring information according to the aspect of the present invention may further include inputting the information code into a portable terminal device and transmitting to instructed destination at least one of the first and second information included in the information code input into the portable terminal device.

In the method for transferring information according to the aspect of the present, the information code may include information requesting at least one of provision of information of the field device identified by the first information, a purchase of the field device, and repair of the field device. Transmitting to instructed destination at least one of the first and second information may include requesting at least one of the provision of information of the field device, a purchase of the field device, and repair of the field device.

By using at least one of a first information acquired from a field device, a second information indicating a work history for a field device, a third information indicating a reference destination for support information supporting a work of field device, and a fourth information required to enable a program to acquire information from a field device and to set information with respect to a field device, the one aspect of the present invention generates and outputs from an output unit an information code, the information code being input to a portable terminal device. This provides the effect of enabling accurate and reliable information transfer, while maintaining security.

### BRIEF DESCRIPTION OF THE DRAWINGS

FIG. 1 is a block diagram showing an overall constitution of an information transfer system according to an embodiment of the present invention.
FIG. 2 is a block diagram showing main parts of the constitution of a device setting apparatus according to the embodiment of the present invention.
FIG 3 is a drawing showing an example of information displayed on the device setting apparatus according to the embodiment of the present invention.
FIG. 4 is a flowchart showing a processing in the device setting apparatus at the time of an inquiry operation.
FIG. 5 is a flowchart showing a processing in the device setting apparatus at the time of a reporting operation.
FIG. 6 is a flowchart showing a processing in the device setting apparatus at the time of acquiring help information.
FIG. 7 is a flowchart showing a processing in the device setting apparatus at the time of a request.
FIG. 8 is a block diagram showing a variation example of a device setting apparatus according to an embodiment of the present invention.
FIG. 9 is a flowchart showing a processing at the time of activation.

### DETAILED DESCRIPTION OF THE INVENTION

A device setting apparatus, a recording medium recording a device setting program, an information transfer system and an information transfer method according to an embodiment of the present invention will be described in detail below, with references made to the drawings.

### (Overall Information Transfer System Constitution)

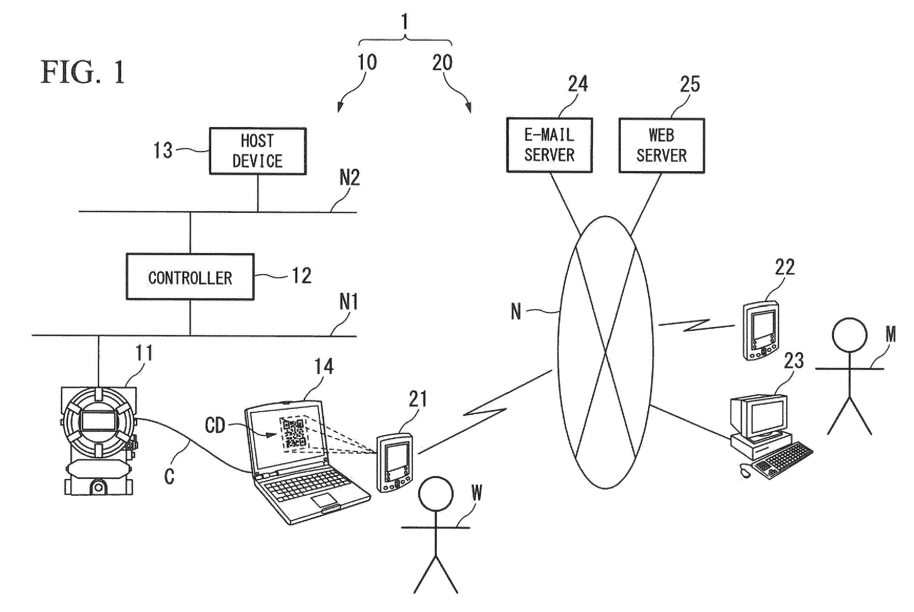

FIG. 1 is a block diagram showing the overall constitution of an information transfer system according to an embodiment of the present invention. As shown in FIG. 1, the information transfer system 1 of the present embodiment has a communication system 10 implemented in a plant and a communication system 20 implemented outside the plant and can transfer information from the communication system 10 to the communication system 20, while maintaining the security of the communication system 10.

The communication system 10 has a field device 11, a controller 12, a host device 13, and a device setting apparatus 14 (device setting means), and communication of various information can be done between the field device 11, the controller 12, and the host device 13. The field device 11 and the controller 12 are connected to a field network N 1, and the controller 12 and the host device 13 are connected to a control network N2. The field network N1 is, for example, a cable network laid throughout on-site in a plant, and the control network N2 is, for example, a cable network connecting the on-site within the plant and a monitoring room. The field network N1 and the control network N2 may be wireless networks.

The field device 11 is a sensor device such as a flow gauge or temperature sensor, a valve device such as a flow control valve or open/close valve, or an actuator device such as a fan or motor, or other device installed on-site in a plant. A plurality of field devices 11 are installed in the plant, and each is managed (controlled) centrally by the controller 12. If the field device 11 is connected by a cable C to the device setting apparatus 14, it is possible to communicate with the device setting apparatus 14.

The controller 12 collects measurement data from the field device 11 (for example, a sensor device) under monitoring by the host device 13 and, based on the collected measurement data, controls the field device 11 (for example, a valve device). The host device 13, for example, is operated by an operator in the plant and used for monitoring a process. Specifically, the host device 13 monitors and manages the controller 12 via the control network N2 and, in accordance with the result of that monitoring or the like (or in accordance with an instruction from an operator) controls the controller 12.

The device setting apparatus 14 is an apparatus for acquiring and displaying various information stored in the field device 11 and setting the field device 11, and is used by a worker W (user) to perform maintenance on the field device 11. Specifically, the device setting apparatus 14 is connected to the field device 11 via the cable C, or is connected to the field device 11 via the cable C and the field network N1 and, by communicating with the field device 11, acquires and displays, for example, device information identifying the field device 11, setting information that has been set into the field device 11, and measurement information or the like measured by the field device 11. The device setting apparatus 14, following instructions from the worker W, also makes settings with respect to the field device 11.

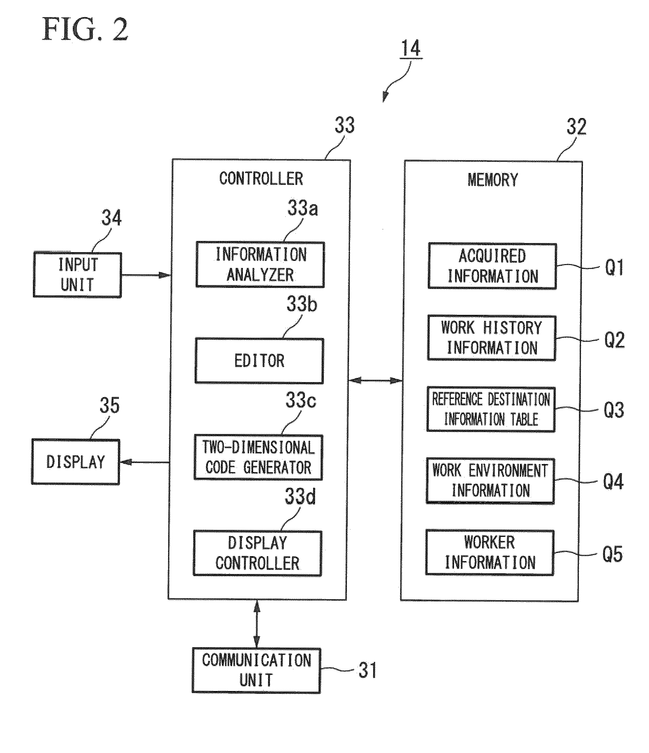

The device setting apparatus 14, using information that must be transferred from the communication system 10 to the communication system 20, generates a two-dimensional code CD (information code) and displays the generated two-dimensional code CD on a display device such as a liquid-crystal display device. Specifically, the device setting apparatus 14 uses at least one information of acquired information Q1 (first information), work history information Q2 (second information), and reference destination information that has been stored in a reference destination information table Q3 (third information), as shown in FIG. 2, to generate the two-dimensional code CD. Details of these types of information will be described later. The device setting apparatus 14 is implemented by, for example, a laptop or tablet computer, or a PDA (personal digital assistant) or the like. Details of the device setting apparatus 14 will be described later.

The communication system 20 has portable terminal devices 21 and 22 that are connectable to the network N such as the Internet, a terminal device 23 connected to the network N, an e-mail server 24, and a web server 25 (server apparatus) connected to the network N, and can communicate between these devices via the network N. To simplify FIG. 1, the base station that communicates wirelessly with the portable terminal devices 21 and 22 is omitted, and the communication network to which the base station is connected and the Internet to which the terminal device 23 and the like are connected are collectively shown as one network N.

The portable terminal device 21 has a camera function (input device), a two-dimensional code CD reading function (input device), and an e-mail sending/receiving function, can communicate via the network N, and is used by the worker W performing maintenance on the field device 11. In contrast, the portable terminal device 22 has at least an e-mail sending/receiving function, can communicate via the network N, and is used by a superior of the worker W or a manager (hereinafter, manager M) of the communication system 10.

The terminal device 23 is a non-portable terminal device having an e-mail sending/receiving function capable of communicating via the network N, and is used by the manager M of the communication system 10. The terminal device 23 is implemented by, for example, a desktop personal computer. Although the above-noted portable terminal device 22 and terminal device 23 are used by the manager M of the communication system 10, in order to maintain security, they are isolated from the communication system 10.

The e-mail server 24 is a server apparatus that distributes e-mail exchanged via the network N. For example, e-mail transmitted from the portable terminal device 21 and addressed to the manager M is distributed to one (or both) of the portable terminal device 22 and the terminal device 23 used by the manager M.

The web server 25 is a server apparatus providing a website of a manufacturer or vendor of the field device 11. The web server 25 accepts requests and inquiries from the worker W performing maintenance on the field device 11, or provides field device 11 information, or accepts a purchase order or repair request with regard to the field device 11, and provides support information (help information) supporting the work on the field device 11. The above-noted help information includes not only information supporting work with respect to the field device 11 itself, but also information supporting work performed by the worker W operating the device setting apparatus 14 (for example, the method of operating the device setting apparatus 14).

### (Constitution of the Device Setting Apparatus 14)

FIG. 2 is a block diagram showing the main parts of the constitution of a device setting apparatus according to an embodiment of the present invention. As shown in FIG. 2, the device setting apparatus 14 has a communication unit 31, a memory 32, a controller 33, an input unit 34, and a display 35 (output unit, output means). The communication unit 31 is connected to the field device 11 via the cable C shown in FIG. 1, and communicates with the field device 11 via the cable C, under the control of the controller 33.

The memory 32 is a volatile memory such as a RAM (random access memory) or a non-volatile memory such as a flash ROM (read-only memory) or EEPROM (electrically erasable and programmable ROM), and stores various information used in the device setting apparatus 14. Specifically, in addition to the acquired information Q1, the work history information Q2, and the reference destination information table Q3, the memory 32 stores work environment information Q4 and worker information Q5.

The acquired information Q1 is information acquired from the field device 11, and includes device information identifying the field device 11, setting information set into the field device 11, and measurement information measured by the field device 11 and the like. The work history information Q2 indicates the work history with respect to the field device 11. The work history information Q2 includes, for example, information indicating the date and time of maintenance work on the field device 11, information indicating the worker W who performed the maintenance work, and information indicating the details of work performed and the like.

The above-noted reference destination information table Q3 is a table of information (URLs: uniform resource locators) of a plurality of reference destinations for support information (help information) supporting work on a field device 11. Specifically, the reference destination information table Q3 is a table in which the names (device names) of field devices 11, the various parameter names used in the device setting apparatus 14, and the URLs of help information provided by the web server 25 are associated with each other.

The above-noted work environment information Q4 indicates the work environment of the device setting apparatus 14 (the work environment in which the worker W operates the device setting apparatus 14). This information is used, for example, in parsing the cause of a problem occurring during maintenance into either the field device 11 side or the device setting apparatus 14 side. The above-noted worker information Q5 identifies the worker W using the device setting apparatus 14. The worker information Q5 is stored in the memory 32, for example, when the worker W logs into the device setting apparatus 14.

The controller 33 performs overall control of the operation of the device setting apparatus 14. For example, the controller 33 controls the communication unit 31 and communicates with the field device 11, acquiring various information stored in the field device 11 and setting information with respect to the field device 11. The controller 33 reads out information from the memory 32 in accordance with instructions from the worker W input from the input unit 34, and generates a two-dimensional code CD. The controller 33 causes display on the display 35 of the acquired information Q1 acquired from the field device 11, the work history information Q2, and the generated two-dimensional code CD.

The controller 33 has an information analyzer 33a, an editor 33b, a two-dimensional code generator 33c (generator, generating means), and a display controller 33d (output means). The information analyzer 33a analyzes the acquired information Q1 and the work history information Q2 that has been stored in the memory 32. Specifically, to verify that improper information is not included in the acquired information Q1, the information analyzer 33a, for example, analyzes whether or not the device information included in the acquired information Q1 is proper information. The information analyzer 33a also, to verify the information included in the work history information Q2, analyzes the work history information Q2. Additionally, the information analyzer 33a analyzes the reference destination information table Q3 and acquires the URLs of reference destinations for required help information.

The editor 33b, in accordance with instructions input from the input unit 34, edits the contents of the acquired information Q1 and the work history information Q2 displayed on the display 35. Specifically, the editor 33b, in accordance with instructions input from the input unit 34, adds information (for example, a title) to the acquired information Q1 and the work history information Q2 displayed on the display 35, or changes/deletes the content of the acquired information Q1 and the work history information Q2. For example, in the case of an instruction to receive information of the field device 11 (provision of delivery information, initial value information, newly arrived information) or a purchase order for a field device 11 (instruction for replacement, additional purchase, or the like) or a repair instruction for field device 11 input from the input unit 34, the editor 33b adds the acquired information Q1 displayed on the display 35 with information requesting provision of field device 11 information, a purchase order, or repair of the field device 11.

The two-dimensional code generator 33c, in accordance with instructions input from the input unit 34, uses at least one of the acquired information Q1, the work history information Q2, and the reference destination information stored in the reference destination information table Q3 stored in the memory 32 to generate the two-dimensional code CD. If the contents of the acquired information Q1 and the work history information Q2 displayed on the display 35 have been edited by the above-noted editor 33b, the two-dimensional code generator 33c generates the two-dimensional code CD using the information after editing. The two-dimensional code CD generated by the two-dimensional code generator 33c may be a matrix-type two-dimensional code such as a QR code (registered trademark) or a stack-type two-dimensional code.

The display controller 33d controls the display on the display 35. Specifically, the display controller 33d causes display of the acquired information Q1 and work history information Q2 read out from the memory 32 on the display 35 in a text format readable by the worker W, and also displays the two-dimensional code CD generated by the two-dimensional code generator 33c on the display 35. The display controller 33d, in accordance with instructions input from the input unit 34, causes an enlarged or reduced display of the two-dimensional code CD displayed on the display 35.

The information analyzer 33a, the editor 33b, the two-dimensional code generator 33c, and the display controller 33d provided in the controller 33 are implemented by the execution by a non-illustrated MPU (microprocessing unit) provided in the controller 33 of a program for the implementation of the functions of each unit. That is, the above-noted information analyzer 33a, editor 33b, two-dimensional code generator 33c, and display controller 33d are implemented by software and hardware resources operating in concert.

The program to implement the above-noted functions may be distributed in a condition of being recorded in a computer-readable recording medium such as, for example, a CD-ROM or DVD(registered trademark)-ROM or distributed via an external network such as the Internet. The various functions provided in the controller 33 may be implemented by software by reading out and installing the program recorded in a recording medium, or by downloading the program from an external network and installing it.

The input unit 34 has an input device such as a keyboard or a mouse, and inputs instructions in accordance with operations by the worker W. For example, the input unit 34 inputs an instruction identifying information used to generate the two-dimensional code CD, and an instruction to generate the two-dimensional code CD and the like. The display 35 has a display device such as a liquid-crystal display device and displays various information under the control of the display controller 33d. For example, the display 35 displays the above-described acquired information Q1, the work history information Q2, the above-described two-dimensional code CD, and various other information.

### (Device Setting Apparatus Display Example)

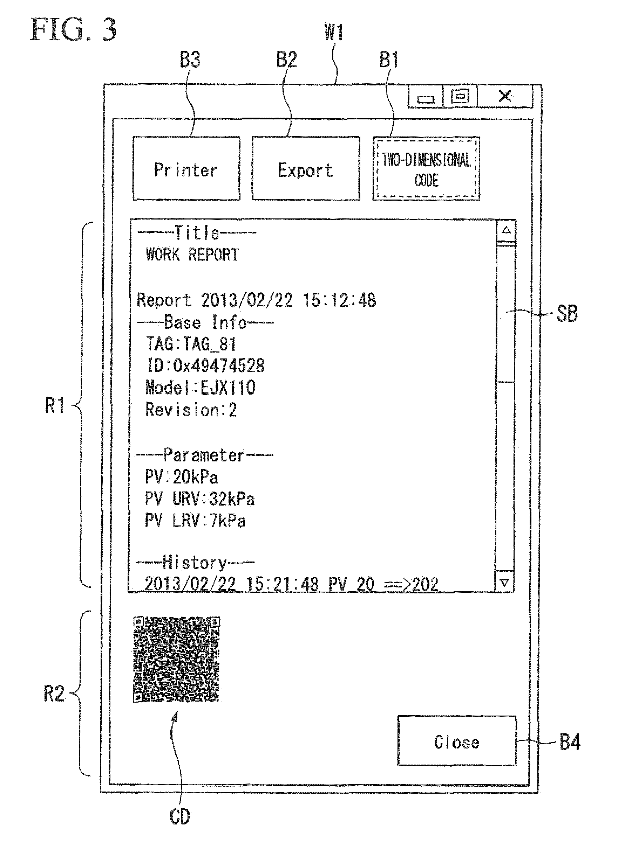

FIG. 3 is a drawing showing an example of the information displayed on the device setting apparatus according to an embodiment of the present invention. If the worker W has an inquiry or request to make to the manager M, or there is request for provision of field device 11 information, or a purchase or repair of the field device 11 to make to the manufacturer or vendor of the field device 11, the window W1 shown in FIG. 3 is a transmitted information generation window displayed on the display 35 of the device setting apparatus 14. As shown in FIG. 3, the transmitted information generation window W1 has a text display region R1 (first display region) and a two-dimensional code display region R2 (second display region).

The text display region R1 is a region in which the acquired information Q1 and the work history information Q2 and the like, which are read out from the memory 32, are displayed in text format. In the example shown in FIG. 3, the title (Title) to be included in the two-dimensional code and a part of the device information (Base Info) acquired from the field device 11, setting information set into the field device 11 and measurement information measured by the field device 11 (Parameter), and the work history (History) are displayed. The above-noted title is information added by the editor 33b based on an instruction from the worker W.

The text display region R1 has a scroll bar SB for changing the displayed content in the text display region R1. By operating the scroll bar SB, the worker W can display arbitrary information from among the information displayable in the text display region R1. That is, it is possible by operating the scroll bar SB to display in the text display region R1 information that is displayable in the text display region R1 but is not actually displayed because of the size limitation of the text display region R1.

The two-dimensional code display region R2 is a region in which the two-dimensional code CD generated by the two-dimensional code generator 33c shown in FIG. 2 is displayed. As shown in FIG. 3, the two-dimensional code display region R2 is made somewhat larger than the two-dimensional code CD. This is because the two-dimensional code CD might be enlarged in the display by an instruction from the worker W. The two-dimensional code CD shown by example in FIG. 3 is a matrix-type two-dimensional code such as a QR code (registered trademark).

The transmitted information generation window W1 also has a two-dimensional code generation button B1, an output button B2, a printing button B3, and a close button B4. The two-dimensional code generation button B1 instructs the two-dimensional code generator 33c shown in FIG. 2 to generate a two-dimensional code. The output button B2 issues an instruction to output information displayable in the text display region R1 in a file format. The printing button B3 issues an instruction to print information displayable in the text display region R1. The close button B4 closes the transmitted information generation window W1.

### (Operation of the Information Transfer System)

Next, the operation of the information transfer system having the above-noted constitution will be described. To simplify the following description, the operation when an inquiry is made by the worker W to the manager M regarding the details of work (inquiry operation), the operation when the worker W reports work to the manager M (reporting operation), the operation when the worker W acquires help information required to perform maintenance work (help information acquisition operation), and the operation when the worker W makes a request of provision of information, a purchase, or repair with respect to the field device 11 to the web server 25 (request operation) will be described in sequence.

### (Inquiry Operation)

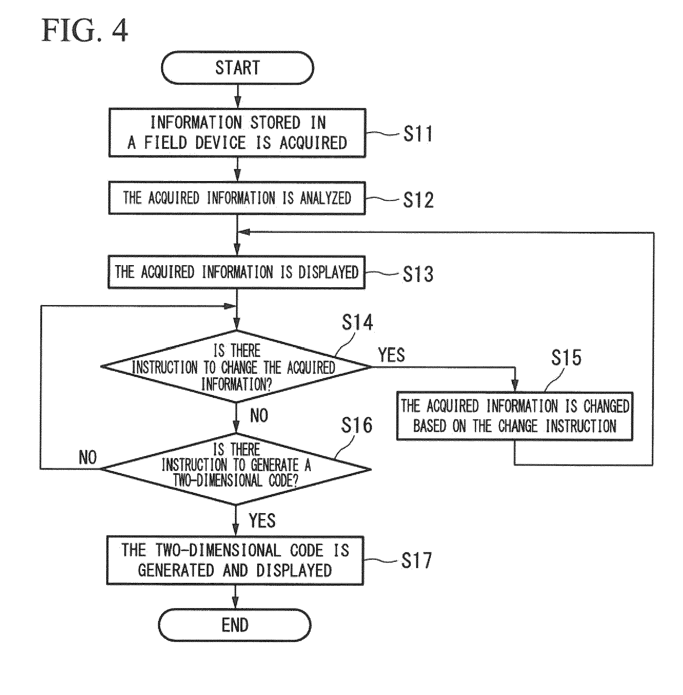

FIG. 4 is a flowchart showing the processing in the device setting apparatus when an inquiry operation is made. An inquiry regarding details of work is made to the manager M by the worker W while performing maintenance work on the field device 11. For this reason, the device setting apparatus 14 is connected to, and can communicate with, the field device 11 being maintenanced via the cable C.

First, when the worker W instructs the device setting apparatus 14 to acquire information from the field device 11, communication occurs between the device setting apparatus 14 and the field device 11, and information that was stored in the field device 11 is acquired by the device setting apparatus 14 (step S11). Specifically, device information identifying the field device 11, setting information set into the field device 11, and measurement information measured by the field device 11 and the like are acquired by the device setting apparatus 14 and, as shown in FIG. 2, this information is stored in the memory 32 as the acquired information Q1.

Next, when the worker W instructs the device setting apparatus 14 to display the acquired information Q1, the acquired information Q1 that had been stored in the memory 32 is read out to the controller 33, and the information analyzer 33a analyzes whether or not the acquired information Q1 includes improper information (step S12). In this case, for example, analysis is made of whether or not the device information included in the acquired information Q1 is proper. If the information is judged to be improper, the series of processings shown in FIG. 4 is terminated.

If the above-noted analysis ends normally (that is, if the judgment is that the acquired information Q1 does not include improper information), the display controller 33d performs processing to display the acquired information Q1 read out from the memory 32 on the display 35 (step S 13). The result is that a transmitted information generation window W1 is displayed on the display 35 of the device setting apparatus 14, with the acquired information Q1 displayed in the text display region R1 thereof (refer to FIG. 3).

Following the above, the controller 33 judges whether or not an instruction to change the acquired information Q1 displayed in the text display region R1 of the transmitted information generation window W1 has been input from the input unit 34 (step S14). If the judgment is that an instruction to change the acquired information Q1 has been input (YES judgment result at step S14), the change instruction is passed from the controller 33 to the editor 33b and, based on the change instruction, the editor 33b performs processing to change the acquired information Q1 displayed in the text display region R1 (step S15). When the changing of the acquired information Q1 is completed, the display controller 33d performs processing to display the changed acquired information Q1 in the text display region R1 of the transmitted information generation window W1 (step S13).

In FIG. 4, because it can be envisioned that the worker will ask the manager M for details of work, for example, an instruction to add a message notifying the manager M is input as an instruction to change the acquired information Q1. The message to be notified to the manager M is, for example: "Inquiry: The following parameters are acquired. Please give work instructions." When such an instruction is input, the editor 33b performs processing to add the input message to the Title shown in FIG. 3.

In contrast to the above, if the judgment is that an instruction to change the acquired information Q1 has not been input (NO judgment result at step S14), the controller 33 judges whether or not an instruction to generate a two-dimensional code has been input (step S16). Specifically, a judgment is made of whether or not an operation to press the two-dimensional code generation button B1 provided in the transmitted information generation window W1 shown in FIG. 3 has been made.

If the judgment is that an instruction to generate a two-dimensional code has not been made (NO judgment result at step S16), the controller 33 again judges whether or not an instruction to change the acquired information Q1 has been input (step S14). If, however, the judgment is that an instruction to generate the two-dimensional code has been made (YES judgment result at step S16), processing is performed to generate and display on the display 35 the two-dimensional code CD (step S17: first and second steps).

Specifically, first, the two-dimensional code generator 33c performs processing that uses information displayable in the text display region R1 of the transmitted information generation window W1 to generate the two-dimensional code CD. Then, the display controller 33d performs processing to display the generated two-dimensional code CD in the two-dimensional code display region R2 of the transmitted information generation window W1. This causes the two-dimensional code CD to be displayed in the transmitted information generation window W1, as shown in FIG. 3. The two-dimensional code CD displayed in the transmitted information generation window W1 can be enlarged or reduced by an instruction from the worker W.

When the two-dimensional code CD is displayed on the device setting apparatus 14, the worker W performs the task of using the portable terminal device 21 to read the two-dimensional code CD displayed on the device setting apparatus 14 (third step), as shown in FIG. 1. When the two-dimensional code CD is read out by the portable terminal device 21, the worker W performs an operation of transmitting the information included in the read-out two-dimensional code CD to the manager M by, for example, e-mail.

The above operations cause an e-mail addressed to the manager M from the portable terminal device 21 to be distributed by the e-mail server 24 to either the portable terminal device 22 or the terminal device 23 used by the manager M (or to both) (fourth step). Upon verifying the contents of the e-mail distributed to the portable terminal device 22 or the terminal device 23, the manager M performs an operation to reply to the worker W by an e-mail regarding the details of work. This operation causes the e-mail addressed to the worker W from either the portable terminal device 22 or the terminal device 23 to be distributed by the e-mail server 24 to the portable terminal device 21 used by the worker W. Upon verifying the contents of the e-mail distributed to the portable terminal device 21, the worker W performs work in accordance with that e-mail.

In this manner, in making an inquiry to the manager M regarding the details of work, the worker W uses the information to be notified to the manager M to generate and display on the device setting apparatus 14 the two-dimensional code CD, reads out the two-dimensional code CD displayed on the device setting apparatus 14 using the portable terminal device 21, and transmits the two-dimensional information included in the two-dimensional code CD to the manager M. This enables more accurate and more reliable transfer of information than in the case of the worker W communicating orally with the manager M. Also, because the transfer of information between the communication systems 10 and 20 is performed by reading out the two-dimensional code CD displayed on the device setting apparatus 14 using the portable terminal device 21, with no mutual connection between the communication systems 10 and 20, it is possible to maintain security.

If the worker W is making an inquiry with respect to the manager M, the two-dimensional code may be generated using information in which the work environment information Q4 has been added to the above-noted information. By transmitting the work environment information Q4 to the manager M, if a problem occurs during maintenance work, the manager M can parse the cause thereof as being either on the field device 11 side or the device setting apparatus 14 side.

Also, when making a purchase or the like of a field device 11 to the manufacturer or vendor of the field device 11, processing similar to the processing shown in FIG. 4 is performed by the device setting apparatus 14. However, the information included in the two-dimensional code CD (two-dimensional code CD displayed on the device setting apparatus 14) read out by the portable terminal device 21 being transmitted to the web server 25 is different from the above-described operation (inquiry operation). The details of processing when a purchase or the like for the field device 11 is made (request operation) will be described later.

### (Reporting Operation)

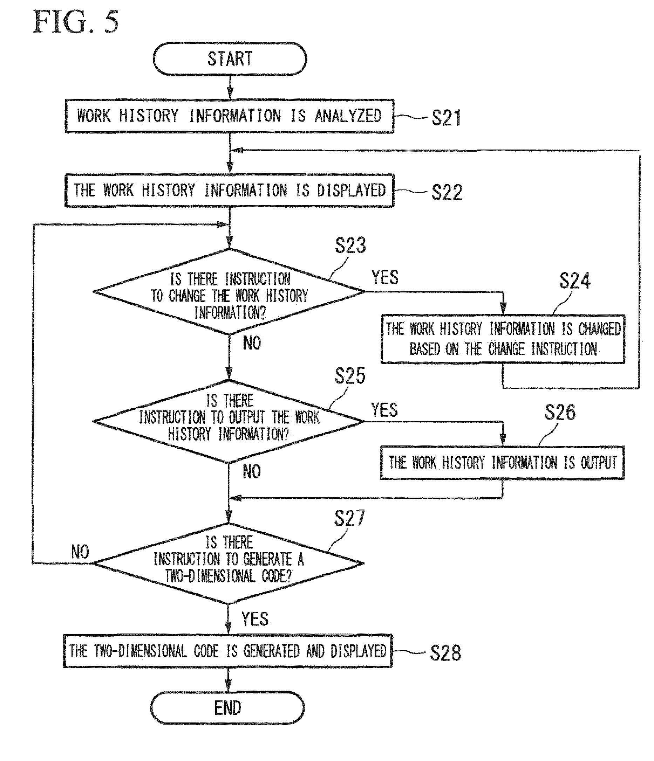

FIG. 5 is a flowchart showing the processing in the device setting apparatus at the time of a reporting operation. A worker W makes a work report to the manager M at the time of completion of the maintenance work on the field device 11. For this reason, it is not necessary that the device setting apparatus 14 is connected to the field device 11.

First, when the worker W makes a request to the device setting apparatus 14 to display the work history information Q2, the information analyzer 33a performs processing to read out the work history information Q2 that was stored in the memory 32 to the controller 33 and to analyze the work history information Q2 (step S21). The work history information Q2 has the work performed by the instructions from the worker W stored therein in time sequence and includes the details of work performed with respect to a plurality of field devices 11. For this reason, the information analyzer 33a analyzes the work history information Q2 to perform processing to determine what work was done to which field device 11 and when the work was done.

When the above-noted analysis is completed, the display controller 33d performs processing to display on the display 35 the work history information Q2 read out from the memory 32 (step S22). The result is that the transmitted information generation window W1 is displayed on the display 35 of the device setting apparatus 14, with the work history information Q2 displayed in the text display region R1 thereof (refer to FIG. 3).

Following the above, the controller 33 judges whether or not an instruction to change the work history information Q2 displayed in the text display region R1 of the transmitted information generation window W1 has been input from the input unit 34 (step S23). If the judgment is that an instruction to change the work history information Q2 has been input (YES judgment result at step S23), the editor 33b, based on the input change instruction, performs processing to change the work history information Q2 displayed in the text display region R1 (step S24). When the changing of the work history information Q2 is completed, the work history information Q2 after the change is displayed in the text display region R1 (step S22).

In FIG. 5, because it can be envisioned that the worker W will make a work report to the manager M, for example, an instruction to add a message indicating a work report or an instruction to delete information other than information to be transmitted as a work report is input as an instruction to change the above-noted work history information Q2. The above-noted message is a message, for example, of "Work Report Transmission". When such an instruction is input, the editor 33b performs processing to add the input message to the Title indicated in FIG. 3 or, based on the instruction, processing to delete information displayed in the text display region R1.

If, however, the judgment is that an instruction to change the work history information Q2 is not input (NO judgment result at step S23), the controller 33 judges whether or not there was an instruction to output the work history information Q2 (step S25). Specifically, judgment is made of whether or not the output button B2 provided in the transmitted information generation window W1 shown in FIG. 3 has been pressed. If the judgment is that an instruction to output the work history information Q2 has been made (YES judgment result at step S25), the controller 33 performs processing to output the work history information Q2 in a file format.

If the judgment at step S25 is that an instruction to output the work history information Q2 was not made (NO judgment result at step S25), or if the processing of step S26 has been completed, the controller 33 judges whether or not there was an instruction to generate the two-dimensional code (step S27). Specifically, a judgment is made of whether or not the two-dimensional code generation button B1 provided in the transmitted information generation window W1 shown in FIG. 3 has been pressed.

If the judgment is that an instruction to generate the two-dimensional code was not made (NO judgment result at step S27), the controller 33 judges again whether or not an instruction to change the work history information Q2 has been input (step S23). If, however, the judgment is that an instruction to generate the two-dimensional code was made (YES judgment result at step S27), processing to generate and display on the display 35 the two-dimensional code CD is performed (step S28: first and second steps). Because the processing of step S28 is the same as the processing of step S17 in the flowchart shown in FIG. 4, its description will be omitted.

When the two-dimensional code CD is displayed on the device setting apparatus 14, the worker W performs the task of using the portable terminal device 21 to read the two-dimensional code CD displayed on the device setting apparatus 14 (third step) as shown in FIG. 1. When the two-dimensional code CD is read by the portable terminal device 21, the worker W performs the task of transmitting the information included in the read two-dimensional code CD, for example, by an e-mail addressed to the manager M.

The e-mail addressed to the manager M transmitted from the portable terminal device 21 by the above operation is distributed by the mail server 24 to one (or both) of the portable terminal device 22 and the terminal device 23 used by the manager M (fourth step). Upon verifying the contents of the e-mail distributed to the portable terminal device 22 or the terminal device 23, the manager M can verify the work report made by the worker W. In this manner, a work report is made from the worker W to the manager M.

In this manner, when the worker W wishes to make a work report to the manager M, the worker W displays on the device setting apparatus 14 a two-dimensional code CD generated using the work information to be reported to the manager M, reads the two-dimensional code CD displayed on the device setting apparatus 14 using the portable terminal device 21, and transmits to the manager M the information included in the two-dimensional code CD. This enables more accurate and more reliable transfer of a work report than in the case of the worker W communicating orally with the manager M regarding the work report.

In the case of making a work report as well, similar to the case of the worker W inquiring to the manager M with regard to details of work, information transfer between the communication systems 10 and 20 is performed by the portable terminal device 21 reading the two-dimensional code CD displayed on the device setting apparatus 14. The result is that there is no mutual connection between the communication systems 10 and 20, enabling maintenance of security.

### (Help Information Acquisition Operation)

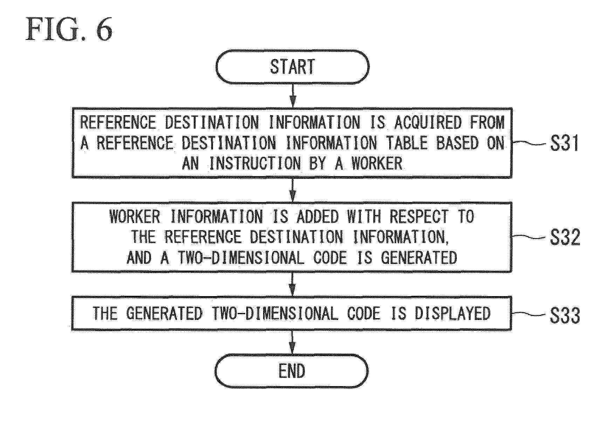

FIG. 6 is a flowchart showing the processing in the device setting apparatus at the time of acquiring help information. The cases in which help information is required are almost always when the worker W is performing maintenance on a field device 11 using the device setting apparatus 14. For this reason, the help information is usually acquired when the device setting apparatus 14 is connected to the field device 11. However, even if the device setting apparatus 14 is not connected to the field device 11, it is possible to acquire help information.

Consider the case in which, during the use of the device setting apparatus 14 by the worker W, detailed information regarding device information or parameters and the like displayed on the display 35 of the device setting apparatus 14 becomes necessary. If this is the case, the worker W, having identified the device information or parameters and the like for which detailed information is required, makes an instruction to acquire help information. When an instruction is made to acquire help information, the information analyzer 33a of the controller 33 performs processing to analyze the reference destination information table Q3 stored in the memory 32 and to acquire the reference destination information (URL) indicating the reference destination of help information for the device information or parameters and the like specified by the worker W (step S31).

When the reference destination information is acquired, the worker information Q5 is read out to the controller 33, and the two-dimensional code generator 33c performs processing to generate a two-dimensional code CD, using the information in which the worker information Q5 is added with respect to the reference destination information acquired at step S31 (step S32: first step). The worker information Q5 is added to the reference destination information in order to enhance the service, by enabling a manufacturer or vendor of the field device 11 providing the web server 25 to know what worker W referenced what type of information. If the worker information Q5 is not needed, it can be omitted.

Continuing, the display controller 33d performs processing to display the generated two-dimensional code CD in the two-dimensional code display region R2 of the transmitted information generation window W1 (step S33: second step). The two-dimensional code CD displayed in the transmitted information generation window W1 can be enlarged or reduced in accordance with an instruction by the worker W.

When the two-dimensional code CD is displayed on the device setting apparatus 14, the worker W performs the operation of using the portable terminal device 21 to read the two-dimensional code CD displayed on the device setting apparatus 14 as shown in FIG. 1 (third step). When the two-dimensional code CD is read by the portable terminal device 21, the worker W performs the task of accessing the reference destination information (URL) included in the read-out two-dimensional code CD. When this operation is performed, access is made to the web server 25 from the portable terminal device 21 based on the reference destination information included in the two-dimensional code CD, and help information in response to the reference destination information is provided by the web server 25 to the portable terminal device 21. This enables the worker W to acquire detailed information regarding the specified device information, parameters, and the like.

In this manner, when the worker W wishes to acquire help information, a two-dimensional code CD generated using the reference destination information in accordance with the device information, parameters, and the like specified by an operation by the worker W is displayed on the device setting apparatus 14, the two-dimensional code CD displayed on the device setting apparatus 14 is read by the portable terminal device 21, and help information is acquired by accessing the web server 25 based on the reference destination information included in the two-dimensional code CD. This enables more accurate and more reliable acquisition of help information than in the case of the worker W obtaining information orally from the manager M and the like.

In the case acquiring help information as well, similar to the case of the worker W inquiring to the manager M with regard to details of work or making a work report to the manager M, information transfer between the communication systems 10 and 20 is performed by the portable terminal device 21 reading the two-dimensional code CD displayed on the device setting apparatus 14. The result is that there is no mutual connection between the communication systems 10 and 20, thereby maintaining security.

### (Request Operation)

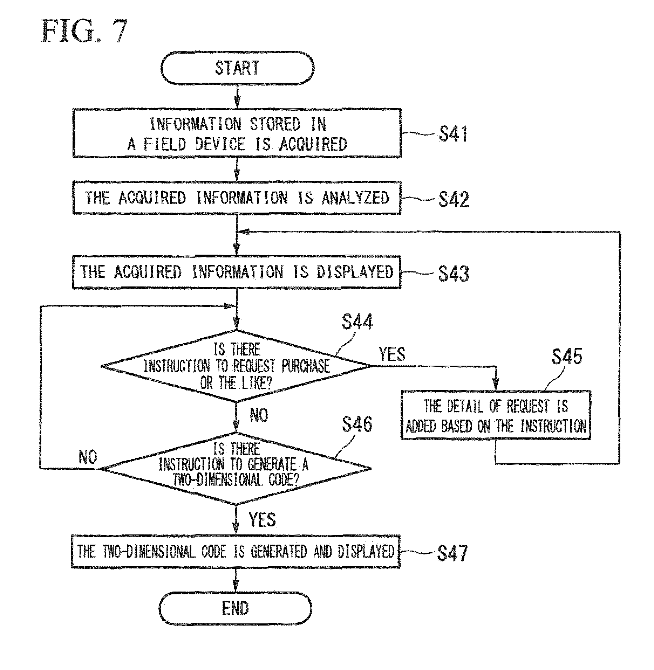

FIG. 7 is a flowchart showing the processing in the device setting apparatus at the time of a request. Although a request for provision of information, purchase, or repair of a field device 11 often happens after completion of maintenance by the worker W of the field device 11 using the device setting apparatus 14, to simplify the description in this case, the device setting apparatus 14 will be assumed to be connected to the field device 11.

First, similar to the inquiry operation described using FIG. 4, processing for the device setting apparatus 14 to acquire information stored in the field device 11 is performed (step S41). Specifically, processing to acquire device information (device serial information) identifying the field device 11 is performed and this is stored into the memory 32 as the acquired information Q1, as shown in FIG. 2. If the device setting apparatus 14 has communicated with the field device 11 even one time in the past, because the device information of that field device 11 is stored as the acquired information Q1 in the memory 32, the processing of step S41 can be omitted.

Next, the information analyzer 33a analyzes whether or not the acquired information Q1 stored in the memory 32 includes device information and whether or not the acquired information Q1 includes improper information (step S42). If the judgment is that the acquired information Q1 does not include device information, or the judgment is that the acquired information Q1 includes improper information, the series of processings shown in FIG. 7 is terminated.

If the above-noted analysis ends normally (that is, if the judgment is that the acquired information Q1 includes device information and also does not include improper information), the display controller 33d performs processing to display the acquired information Q1 read out from the memory 32 on the display 35 (step S43). This causes display on the display 35 of the device setting apparatus 14 of the transmitted information generation window W1, with the acquired information Q1 displayed in the text display region R1 thereof (refer to FIG. 3).

Following this, the controller 33 judges whether any one of a request for provision of field device 11 information, and purchase or repair of the field device 11 has been input from the input unit 34 (step S44). If the judgment is that an instruction has been input (YES judgment result at step S44), based on the instruction input from the input unit 34, the editor 33b performs processing to add the content of the acquired information Q1 displayed in the text display region R1 with the details of the request (information indicating the details of the request for provision of field device 11 information, or purchase or repair of the field device 11) (step S45).

Specifically, when making a request for provision of information of the field device 11, processing is done to add the intent to request delivery information at the time of delivery of the field device 11, initial setting values, or new information regarding the field device 11. When requesting the purchase of a field device 11, processing is done to add the quantity, model, shipping destination, and desired shipping date. When requesting repair of a field device 11, processing is done to add the schedule and the form of repair (shipping, dispatch of an engineer, or the like).

With respect to the above, if the judgment is made that an instruction to request any one of provision of information, a purchase, and repair with respect to the field device 11 is not input from the input unit 34 (NO judgment result at step S44), the controller 33 judges whether or not there was an instruction to generate a two-dimensional code (step S46). Specifically, a judgment is made as to whether or not the two-dimensional code generation button B1 provided in the transmitted information generation window W1 shown in FIG. 3 has been pressed.

If the judgment is that the two-dimensional code generation instruction has not been made (NO judgment result at step S46), the controller 33 again judges whether an instruction to request any one of provision of information, a purchase, and repair with respect to the field device 11 has been input from the input unit 34 (step S44). If, however, the judgment is made that an instruction for generation of the two-dimensional code has been made (YES judgment result at step S46), processing is performed to generate and display on the display 35 the two-dimensional code CD (step S47: first and second steps).

When the two-dimensional code CD is displayed on the device setting apparatus 14, the worker W uses the portable terminal device 21 to read the two-dimensional code CD displayed thereon, as shown in FIG. 1 (third step). When the portable terminal device 21 reads the two-dimensional code CD, the worker W performs an operation to transmit information included in the read two-dimensional code CD to the web server 25. This transmits to the web server 25 information including device information identifying the field device 11 and information indicating a request for any one of provision of information, a purchase, and repair with respect to the field device 11 to the web server 25, thereby making a request for any one of provision of information, a purchase, and repair with respect to the field device 11 (fourth step).

In this manner, when making a request for any one of provision of information, a purchase, and repair with respect to the field device 11 to the web server 25, a two-dimensional code CD generated using information indicating that intent and the like and information identifying the field device 11 are displayed on the device setting apparatus 14, the two-dimensional code CD displayed on the device setting apparatus 14 is read by the portable terminal device 21, and the information included in the two-dimensional code CD is transmitted to the web server 25. This enables more accurate and more reliable transfer of information, while maintaining security, than in the case of the worker W making the request orally.

In the example shown in FIG. 7, the description was for the case in which processing to add the details of the request is performed by the device setting apparatus 14 (step S45). However, this processing performed by the device setting apparatus 14 may be performed in the portable terminal device 21. Specifically, when information indicating a request for any one of provision of information, a purchase, and repair with respect to the field device 11 and the like is transmitted from the portable terminal device 21 to the web server 25, the web server 25 sends a pre-established input form to the portable terminal device 21, and the worker W operates the portable terminal device 21 to add the details of the request to the input form.

### (Device Setting Apparatus 14 Variation Example)

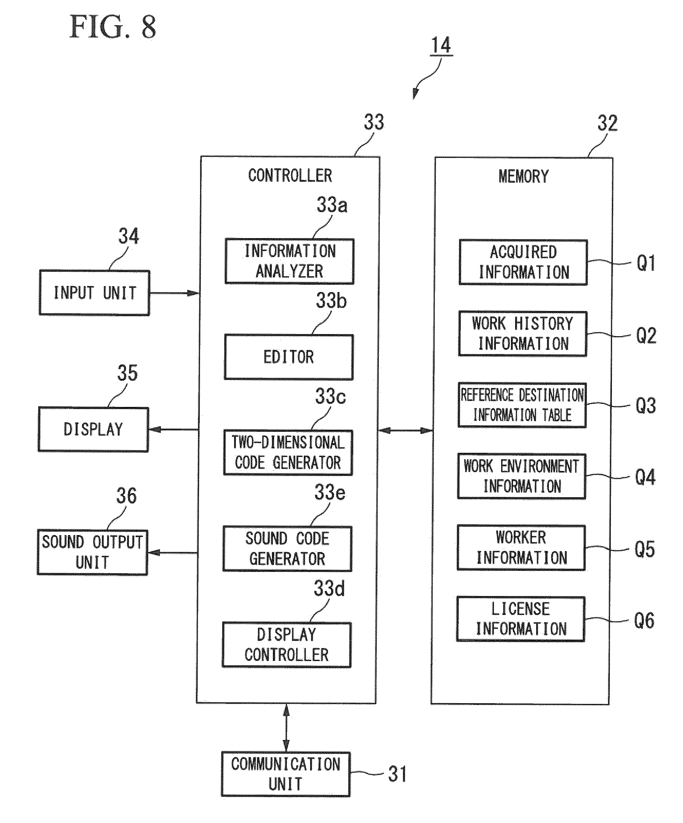

FIG. 8 is a block diagram showing a variation example of a device setting apparatus according to an embodiment of the present invention. The device setting apparatus 14 shown in FIG. 8, compared with the device setting apparatus 14 shown in FIG. 2, has a sound code generator 33e (generator, generation means) added to the controller 33, and also has a sound output unit 36 (output unit, output means). In the device setting apparatus 14 shown FIG. 8, license information Q6 (fourth information) is stored in the memory 32. A device setting apparatus 14 such as this can output as sound information required to be transferred from the communication system 10 to the communication system 20 and can also perform activation to validate a program to implement the functions provided in the controller 33, while maintaining security.

The sound code generator 33e, in accordance with an instruction input from the input unit 34, generates a sound code using at least one of the acquired information Q1, the work history information Q2, the reference destination information stored in the reference destination information table Q3, and the license information Q6 that are stored in the memory 32. The term sound code as used herein refers to a sound data for annunciating the above-noted types of information by sound. The sound code may be one that emits a sound of a frequency outside the audible frequency range (of approximately from 20 Hz to 20 kHz), or may be one that emits a sound of a frequency within the audible frequency range. The sound output unit 36 can be implemented by, for example, a speaker or vibrator (for example, an ultrasonic vibrator), and emits (outputs) a sound code generated by the sound code generator 33e as a sound.

The above-noted sound code generator 33e, similar to the information analyzer 33a to the display controller 33d provided in the controller 33, can be implemented by a program for implementing the function of the sound code generator 33e being executed by a non-illustrated MPU provided in the controller 33. The program for implementing the function of the sound code generator 33e, similar to the program for implementing the functions of the information analyzer 33a to the display controller 33d, may be distributed in a condition of being recorded in a computer-readable recording medium, such as a CD-ROM or DVD (registered trademark)-ROM or distributed via an external network such as the Internet.

The license information Q6 is used to validate the program implementing the functions provided in the controller 33 by activation. The license information Q6 is required to execute (to validate) the above-noted program, is provided by the vendor providing the program, and, for example, is input and stored into the memory 32 when the program is installed into the device setting apparatus 14.

In the device setting apparatus 14 having the above-noted constitution, a sound code generation button (not shown) that instructs the sound code generator 33e to generate a sound code is provided in the same manner as the two-dimensional code generation button B1 shown in FIG. 3. When the worker W presses the sound code generation button, the sound code generator 33e uses at least one of the acquired information Q1, the work history information Q2, the reference destination information stored in the reference destination information table Q3, and the license information Q6 to generate a sound code, a sound being output from the sound output unit 36 in accordance with the generated sound code.

After pressing the sound code generation button as described above, the worker W operates the portable terminal device 21 to, for example, enable a microphone function (input device) thereof and input to the portable terminal device 21 the sound output from the device setting apparatus 14. This, in the same manner as reading the information included in the two-dimensional code CD, enables the input to the portable terminal device 21 of information included in the sound (sound code) output from the device setting apparatus 14.

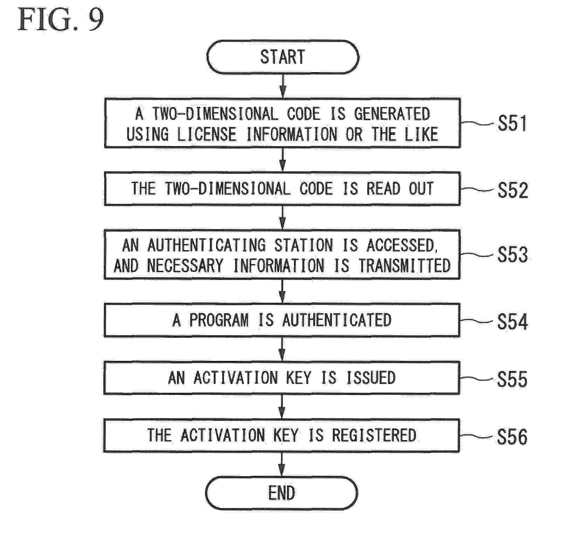

The operation at the time of activation will next be described. FIG. 9 is a flowchart showing the processing at the time of activation. When activation is performed, the device setting apparatus 14 first uses the license information Q6 or the like stored in the memory 32 to perform processing to generate and display the two-dimensional code CD (step S51: first and second steps). Specifically, the two-dimensional code CD is generated using the license information Q6, information identifying the device setting apparatus 14 (for example, the configuration information of a computer that implements the device setting apparatus 14, hereinafter called PC information), and the reference destination information of a server (authenticating station) that will perform activation, that are stored in the memory 32.

Next, at the portable terminal device 21, processing is performed to read the two-dimensional code CD displayed on the device setting apparatus 14 (step S52: third step). Following this, at the portable terminal device 21, based on the reference destination information included in the information read from the two-dimensional code CD, the server to perform activation is accessed, and processing is performed to transmit the information necessary for activation (step S53: fourth step). Specifically, the license information Q6 and the PC information included in the information read from the two-dimensional code CD are transmitted.

Next, at the server performing activation, processing is performed to authenticate the program to be used in the device setting apparatus 14 (step S54). For example, authentication of whether or not the license information Q6 transmitted from the portable terminal device 21 is proper and whether or not the program is installed in a number of computers that exceeds the scope of the license, based on the PC information.

If the program to be used in the device setting apparatus 14 is authenticated for proper use within the scope of the license, the server performing activation performs processing to issue an activation key to validate the program (step S55). Then, the issued activation key is transmitted to, and displayed on, the portable terminal device 21.

Next, at the device setting apparatus 14, processing to register the issued activation key is done (step S56). Specifically, the worker W operates the input unit 34 of the device setting apparatus 14 to input the activation key displayed on the portable terminal device 21 and to give a registration instruction, thereby registering the activation key into the device setting apparatus 14. The above processing completes the activation, and enables use of the program (program to implement the functions provided in the controller 33) in the device setting apparatus 14. In this manner, the device setting apparatus 14 can be activated without connection to the network N.

Although the foregoing has been a description of a device setting apparatus, a program, and a recording medium, and an information transfer system and method according to an embodiment of the present invention, the present invention is not limited to this embodiment, and can be freely modified within the scope of the present invention. For example, although the above-described embodiment has been described for an example in which a two-dimensional code is generated at the device setting apparatus 14, the information code generated at the device setting apparatus 14 may be a one-dimensional code (a so-called bar code), and may be a color code. Also, in the case in which the amount of information to be transferred between the communication systems 10 and 20 is large, it may be split up and displayed as a plurality of information codes. In this case, the plurality of split information codes may be display sequentially one at a time in the two-dimensional code display region R2 or may multiply be displayed simultaneously in the two-dimensional code display region R2.

In the above-noted embodiment, the description was for an example in which a two-dimensional code was generated automatically from the reference destination (URL) in the help information acquisition operation. However, similar to the inquiry operation and the reporting operation, the reference destination information may be displayed in the text display region R1 of FIG. 3 and a two-dimensional code generated from that reference destination information may be displayed on the two-dimensional code display region R2.

## Claims

1. A device setting apparatus comprising a generator configured to generate an information code using at least one of a first information acquired from a field device by communicating with the field device, a second information indicating a work history for the field device, a third information indicating a reference destination for support information supporting a work of field device, and a fourth information required to enable a program to acquire information from the field device and to set information with respect to the field device.

2. The device setting apparatus according to claim 1, further comprising at least one of a display configured to display the information code and a sound output unit configured to output the information code as a sound.

3. The device setting apparatus according to claim 2, wherein the display comprises a first display region configured to display at least one of the first, second, third, and fourth information, and a second display region configured to display the information code generated by the generator.

4. The device setting apparatus according to claim 3, further comprising:
an input unit configured to receive an instruction; and
an editor configured to edit the information displayed in the first display region in accordance with the instruction input from the input unit,
wherein if the editor edits the information displayed in the first display region, the generator generates the information code using the edited information.

5. The device setting apparatus according to claim 4, wherein the information code displayed in the second display region is enlargeable or reducible in accordance with the instruction input from the input unit.

6. The device setting apparatus according to claim 4 or claim 5, wherein the editor is configured to add the information displayed in the first display region with information requesting at least one of provision of information of the field device, a purchase of the field device, and repair of the field device in accordance with the instruction input from the input unit.

7. The device setting apparatus according to one of claims 1 to 6, wherein the information code is one of a one-dimensional code, a two- dimensional code, and a color code.

8. The device setting apparatus according to one of claims 1 to 7, wherein the first information comprises at least one of device information identifying the field device, setting information set into the field device, and measurement information measured by the field device.

9. The device setting apparatus according to one of claims 1 to 8, wherein the fourth information comprises license information of the program.

10. A non-transitory computer-readable storage medium storing a device setting program, which when executed by a computer, causes the computer to generate an information code using at least one of a first information acquired from a field device by communicating with the field device, a second information indicating a work history for the field device, a third information indicating a reference destination for support information supporting a work of field device, and a fourth information required to enable a program to acquire information from the field device and to set information with respect to the field device.

11. An information transfer system comprising:
the device setting apparatus according to one of claims 1 to 9; and
a portable terminal device comprising an input device configured to receive the information code output from the device setting apparatus, the portable terminal device being configured to transmit to instructed destination at least one of the first and second information included in the information code input into the input unit.

12. The information transfer system according to claim 11, wherein if the information code input into the input device comprises the third information, the portable terminal device is accessible to the reference destination indicated by the third information via network.

13. A method for transferring information, comprising
generating an information code using at least one of a first information acquired from a field device, a second information indicating a work history for the field device, a third information indicating a reference destination for support information supporting a work of field device, and a fourth information required to enable a program to acquire and set maintenance information of the field device with respect to the field device.

14. The method for transferring information according to claim 13, further comprising:
inputting the information code into a portable terminal device; and
transmitting to instructed destination at least one of the first and second information included in the information code input into the portable terminal device.

15. The method for transferring information according to claim 14, wherein:
the information code comprises information requesting at least one of provision of information of the field device identified by the first information, a purchase of the field device, and repair of the field device; and
transmitting to instructed destination at least one of the first and second information comprises requesting at least one of the provision of information of the field device, a purchase of the field device, and repair of the field device.
